# EUROPEAN PATENT APPLICATION

(11) **EP 3 339 687 A1**
(43) Date of publication of application: **27.06.2018**
(21) Application number: 17203503.2
(22) Date of filing: 24.11.2017
(51) Int. Cl.: F16H 57/08, F16H 57/04

(54) **PLANETARY GEAR DEVICE**

(30) Priority: 22.12.2016 JP 2016249983
(71) Applicant: HONDA MOTOR CO., LTD., Tokyo 107-8556 (JP)
(72) Inventor: HAYAKAWA, Takashi, Wako-shi, Saitama 351-0193 (JP); KOMURO, Hirokazu, Wako-shi, Saitama 351-0193 (JP); SUZUKI, Hitoshi, Wako-shi, Saitama 351-0193 (JP); ENOMOTO, Tsukasa, Wako-shi, Saitama 351-0193 (JP)
(74) Representative: Weickmann & Weickmann PartmbB

(57) **Abstract**

[SUBJECT] To provide a planetary gear device capable of securing supply of oil toward a bearing even if the planetary gear is made compact.

[MEANS FOR SOLUTION] The planetary gear device includes a planetary gear 97 and a planetary carrier 98 that rotatably supports the planetary gear 97 by a bearing 147. The planetary carrier 98 includes a groove 153 that is capable of guiding oil in a radial direction of the planetary carrier 98, an oil reservoir 152 is arranged at an end of the groove 153, the oil reservoir 152 accumulating the oil therein, a cutout is arranged on an end surface 148 of the planetary gear 97, the cutout traversing the end surface 148 in a radial direction of the planetary gear 97, and the oil reservoir 152 and the cutout overlap with each other as seen from a direction of the planetary gear 97.

## Description

### [TECHNICAL FIELD]

The present invention relates to a planetary gear device, comprising: a planetary gear; and a planetary carrier that rotatably supports the planetary gear by a bearing.

### [BACKGROUND ART]

Patent Document 1 discloses a planetary gear device. A carrier includes pinion shafts having axes that are parallel with a center axis at an equal distance from the center axis. A pinion gear as a planetary gear is rotatably supported by the pinion shaft. Within the pinion shaft, a pinion oil passage and a radial oil passage are formed, the pinion oil passage extending in an axial direction from an end surface of the pinion shaft, the radial oil passage extending in a radial direction from the pinion oil passage and opening to an outer peripheral surface of the pinion shaft. Oil is supplied to a needle bearing through the pinion oil passage and the radial oil passage.

### [PRIOR ART DOCUMENT]

### [PATENT DOCUMENT]

[Patent Document 1] Japanese Utility Model Application Laid-open No. 61-157750

### [SUMMARY OF THE INVENTION]

### [PROBLEM TO BE SOLVED BY THE INVENTION]

Formation of the pinion oil passage and the radial oil passage causes deterioration of the stiffness of the pinion shaft. In a small pinion gear in particular, the stiffness is insufficient, and these oil passages cannot be employed.

The present invention has been achieved in view of the above-mentioned circumstances, and it is an object thereof to provide a planetary gear device capable of securing supply of oil toward a bearing even if a planetary gear is made compact.

### [MEANS TO SOLVE THE PROBLEMS]

In order to achieve the object, according to a first feature of the present invention, there is provided a planetary gear device, comprising: a planetary gear; and a planetary carrier that rotatably supports the planetary gear by a bearing, characterized in that the planetary carrier includes a groove that is capable of guiding oil in a radial direction of the planetary carrier, an oil reservoir is arranged at an end of the groove, the oil reservoir accumulating the oil therein, a cutout is arranged on an end surface of the planetary gear, the cutout traversing the end surface in a radial direction of the planetary gear and the oil reservoir and the cutout overlap with each other as seen from a direction of the planetary gear.

According to a second feature of the present invention, in addition to the first feature, a plurality of cutouts are provided as said cutout.

According to a third feature of the present invention, in addition to the first feature or the second feature, a plurality of grooves are provided as said groove, and a connection groove is provided to connect the grooves to each other.

According to a fourth feature of the present invention, in addition to the third feature, a washer that covers the grooves is provided, and a recess is provided on a radially inner side of the washer, the recess allowing the oil to pass therethrough.

According to a fifth feature of the present invention, in addition to the fourth feature, a plurality of recesses are provided as said recess, the recesses being disposed at equal intervals in a peripheral direction.

### [EFFECTS OF THE INVENTION]

According to the first feature, the oil supplied to the oil reservoir spills out from the oil reservoir, passes through the cutout, and is supplied to the bearing. Thus, lubrication of the bearing is secured.

According to the second feature, since the plurality of cutouts are provided, the oil can be supplied more efficiently. Furthermore, even if clogging occurs in some cutout due to some cause accompanying compactization of the planetary gear, supply of the oil toward the bearing is positively secured.

According to the third feature, by connecting the grooves to each other, the oil is prevented from being supplied disproportionately to a specific groove, and the quantity of the oil supplied to each groove is equalized.

According to the fourth feature, by arranging the recess in the washer, the oil passes through an inner side of the washer, and the oil can be supplied to the grooves.

According to the fifth feature, by arranging the recesses in the washer, the oil can be supplied to the grooves evenly from any directions.

### [BRIEF DESCRIPTION OF THE DRAWINGS]

[FIG. 1] It is a left side view of an essential part of a two-wheeled motor vehicle.
[FIG. 2] It is a sectional view taken along the line 2-2 of FIG. 1.
[FIG. 3] It is an enlarged view of an essential part of FIG. 2.
[FIG. 4] It is an enlarged sectional view of a transmission case cut along a section thereof including an axis of a transmission shaft and an axis of an intermediate shaft.
[FIG. 5] It is an enlarged view of a portion shown by the arrow 5 of FIG. 3.
[FIG. 6] It is a sectional view taken along the line 6-6 of FIG. 3 in a state where a gear cover and a fixing tool are omitted.
[FIG. 7] It is a sectional view taken along the line 7-7 of FIG. 3.
[FIG. 8] It is an enlarged vertical sectional view of a planetary carrier.
[FIG. 9] It is a front view of the planetary carrier.
[FIG. 10] It is a side view of the planetary carrier.
[FIG. 11] It is a front view of the planetary carrier in a state where a washer is detached.
[FIG. 12] It is a view of one end surface of a planetary gear.

### [MODES FOR CARRYING OUT THE INVENTION]

Hereinafter, an embodiment of the present invention will be explained referring to the attached drawings. Also, in the explanation below, the front, rear, left, right, upward, and downward are to be directions as viewed by an occupant riding on a two-wheeled motor vehicle (scooter).

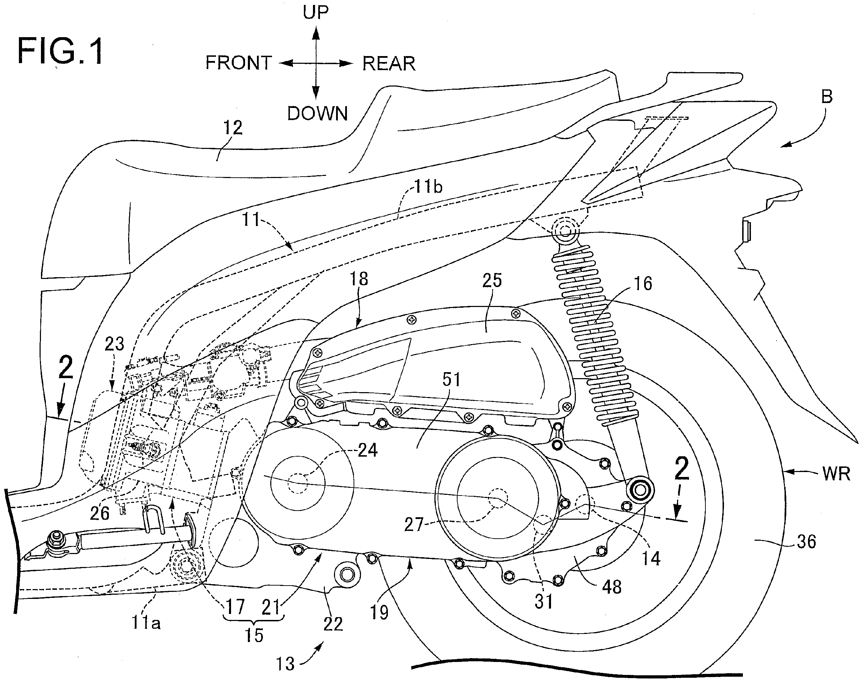

As shown in FIG. 1, a two-wheeled motor vehicle B that is a saddle-ride type vehicle includes a body frame 11. Here, a pivot frame 11a and a rear frame 11b are illustrated, the pivot frame 11a and the rear frame 11b configuring the body frame 11, the rear frame 11b extending upward to the rear from the pivot frame 11a. Above the rear frame 11b, a riding seat 12 is supported by the body frame 11. Below the rear frame 11b, a rear wheel unit 13 is connected to the pivot frame 11a in an up-down swingable manner. The rear wheel unit 13 includes a rear wheel WR and a power unit 15, the rear wheel WR rotating around an axle 14, the axle 14 extending horizontally in a vehicle width direction, the power unit 15 generating power that drives the rear wheel WR. A rear cushion unit 16 is disposed between the rear wheel unit 13 and the rear frame 11b. The rear cushion unit 16 absorbs up-down motion of the rear wheel WR with respect to the rear frame 11b.

The power unit 15 includes a water-cooled engine 17 that is a power source, an intake device 18, and a power transmission device 21, the intake device 18 being connected to the engine 17 and supplying air to the engine 17, the power transmission device 21 being stored in a transmission case (external case) 19 that is fixed to the engine 17. The axle 14 of the rear wheel WR is supported at both ends by of the transmission case 19 and a support arm which will be described below. The power from the engine 17 is transmitted to the rear wheel WR through the power transmission device 21. The engine 17 includes an engine body 23 and a crankshaft 24, the engine body 23 including a crankcase 22, the crankshaft 24 being rotatably supported by the crankcase 22 and having an axis along the vehicle width direction. The intake device 18 includes an air cleaner 25 that is joined to an upper part of the transmission case 19. The air cleaner 25 is connected to a cylinder head 26 of the engine body 23, and has a function of removing dust from the air that is supplied to a combustion chamber of the engine body 23.

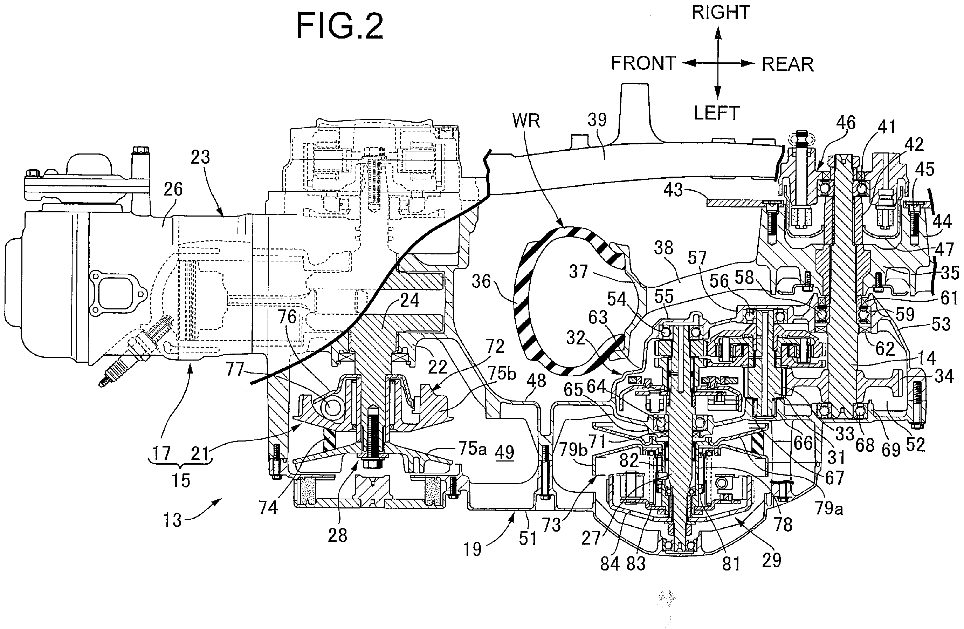

As shown in FIG. 2, the power transmission device 21 includes a belt-type continuously variable transmission 28, a centrifugal type startup clutch 29, and a mechanical transmission 32, the belt-type continuously variable transmission 28 transmitting rotational power of the crankshaft 24 to a transmission shaft 27 while changing the rotational speed of the crankshaft 24 in a continuously variable manner, the startup clutch 29 being interposed between the transmission shaft 27 and the belt-type continuously variable transmission 28, the mechanical transmission 32 being arranged between the transmission shaft 27 and the axle 14 of the rear wheel WR, transmitting the rotational power from the transmission shaft 27 to an intermediate shaft 31 while switching the gear shift stage between a high-speed stage and a low-speed stage, and transmitting the rotational power from the intermediate shaft 31 to the axle 14 while reducing the speed. The transmission shaft 27, the intermediate shaft 31, and the axle 14 have axes that are parallel to each other. An output gear 33 is cut in the intermediate shaft 31. The output gear 33 meshes with a driven gear 34 that is fixed to the axle 14.

The rear wheel WR includes a wheel hub 35, a wheel rim 37, and a connecting portion 38, the wheel hub 35 being supported by the axle 14 in a relatively non-rotatable manner, the wheel rim 37 being coaxially disposed to the wheel hub 35 and retaining a tire 36 in a coaxial manner with the wheel hub 35, the connecting portion 38 connecting the wheel hub 35 and the wheel rim 37 with each other. The mechanical transmission 32 is disposed in a space between the connecting portion 38 and the belt-type continuously variable transmission 28 in the vehicle width direction.

The front end in a vehicle longitudinal direction of a support arm 39 is fastened to the crankcase 22 of the engine body 23. A first bearing 41 is supported by the support arm 39, the first bearing 41 being connected to one end of the axle 14 at the inner ring. The first bearing 41 connects the axle 14 to the support arm 39 in a rotatable manner. The first bearing 41 is configured with a ball bearing for example. Between the first bearing 41 and the wheel hub 35, a spacer 42 is furnished on the axle 14. Between the wheel hub 35 and the support arm 39, the spacer 42 forms a disposal space for a brake disk 43.

At an end surface of the wheel hub 35, an annular protruding portion 44 that is coaxial with the axle 14 is arranged integrally. The brake disk 43 is fastened to the annular protruding portion 44 by a plurality of bolts 45. According to the present embodiment, a drum brake 46 for parking is disposed between the support arm 39 and the wheel hub 35. The drum brake 46 includes a brake drum 47 that is fixed to the spacer 42. However, this drum brake 46 may be omitted.

The transmission case 19 includes a case main body 48, a cover member 51, and a gear cover 53, the case main body 48 continuing from the crankcase 22 and extending rearward on the lateral side of the rear wheel WR, the cover member 51 being joined to the case main body 48 and forming, between the cover member 51 and the outward surface of the case main body 48, a belt-type continuously variable transmission chamber 49 that stores the belt-type continuously variable transmission 28, the gear cover 53 being joined to the case main body 48, extending along the outer shape of the rear wheel WR, and forming, between the gear cover 53 and the inward surface of the case main body 48, a mechanical transmission chamber 52 that stores the mechanical transmission 32.

The gear cover 53 includes a second bearing housing 55 of a bottomed cylindrical body, a third bearing housing 57 of a bottomed cylindrical body, and a fourth bearing housing 59 of a through cylindrical body, the second bearing housing 55 supporting a second bearing 54 that is joined to one end of the transmission shaft 27 at the inner ring, the third bearing housing 57 supporting a third bearing 56 that is joined to one end of the intermediate shaft 31 at the inner ring, the fourth bearing housing 59 supporting a fourth bearing 58 that is joined to an intermediate position of the axle 14 at the inner ring. The second bearing 54 rotatably connects the transmission shaft 27 to the gear cover 53. The third bearing 56 rotatably connects the intermediate shaft 31 to the gear cover 53. The fourth bearing 58 rotatably connects the axle 14 to the gear cover 53. Here, the second bearing 54, the third bearing 56, and the fourth bearing 58 are configured with ball bearings. Seal members 61, 62 formed in an annular shape are incorporated in the fourth bearing housing 59, the seal members 61, 62 ensuring liquid-tightness between the fourth bearing housing 59 and the axle 14. A storage space of the fourth bearing 58 is partitioned between the seal members 61, 62 in the axial direction. In the gear cover 53, a protruding portion 63 is partitioned, the protruding portion 63 protruding toward the inside of the mechanical transmission chamber 52 corresponding to the annular ridge line of the wheel rim 37 of the rear wheel WR. A surface of the protruding portion 63 has a curved shape in the inside of the mechanical transmission chamber 52.

The case main body 48 includes a fifth bearing housing 65 of a through cylindrical body, a sixth bearing housing 67 of a bottomed cylindrical body, and a seventh bearing housing 69 of a bottomed cylindrical body, the fifth bearing housing 65 supporting a fifth bearing 64 that is joined to an intermediate position of the transmission shaft 27 at the inner ring, the sixth bearing housing 67 supporting a sixth bearing 66 that is joined to the other end of the intermediate shaft 31 at the inner ring, the seventh bearing housing 69 supporting a seventh bearing 68 that is joined to one end of the axle 14 at the inner ring. The fifth bearing 64 rotatably connects the transmission shaft 27 to the case main body 48. The sixth bearing 66 rotatably connects the intermediate shaft 31 to the case main body 48. The seventh bearing 68 rotatably connects the axle 14 to the case main body 48. Thus, the transmission shaft 27 is supported at both ends by of the second bearing 54 and the fifth bearing 64. The intermediate shaft 31 is supported at both ends by of the third bearing 56 and the sixth bearing 66. The axle 14 is supported at both ends by of the fourth bearing 58 and the seventh bearing 68. Here, the fifth bearing 64 and the seventh bearing 68 are configured with ball bearings, and the sixth bearing 66 is configured with a needle bearing. A seal member 71 formed in an annular shape is incorporated in the fifth bearing housing 65, the seal member 71 ensuring liquid-tightness between the fifth bearing housing 65 and the transmission shaft 27.

The belt-type continuously variable transmission 28 includes a drive pulley 72, a follower pulley 73, and a V-belt 74 formed in an annular shape, the drive pulley 72 being disposed inside the belt-type continuously variable transmission chamber 49 and being connected to one end of the crankshaft 24, the follower pulley 73 being supported in a relatively rotatable manner by the transmission shaft 27 that has an axis parallel to the crankshaft 24, the V-belt 74 being wound around the drive pulley 72 and the follower pulley 73. The crankshaft 24 protrudes from the crankcase 22, and enters the belt-type continuously variable transmission chamber 49.

The drive pulley 72 includes a fixed pulley half body 75a and a movable pulley half body 75b, the fixed pulley half body 75a being fixed to the crankshaft 24, the movable pulley half body 75b being relatively displaceable in the axial direction with respect to the fixed pulley half body 75a. The movable pulley half body 75b is driven in the axial direction by a centrifugal force applied to a weight roller 77 that is disposed between a ramp plate 76 and the movable pulley half body 75b, the ramp plate 76 being fixed to the crankshaft 24. The V-belt 74 is wound between the fixed pulley half body 75a and the movable pulley half body 75b.

The follower pulley 73 includes an inner cylinder 78 of a cylindrical body, a fixed pulley half body 79a, an outer cylinder 81, and a movable pulley half body 79b, the inner cylinder 78 being furnished to the transmission shaft 27 in a relatively rotatable manner and in a coaxial manner with the transmission shaft 27, the fixed pulley half body 79a being fixed to the inner cylinder 78, the outer cylinder 81 being furnished to the inner cylinder 78 so as to be relatively displaceable in the axial direction and be relatively rotatable with respect to the inner cylinder 78, the movable pulley half body 79b being fixed to the outer cylinder 81 and supported by the inner cylinder 78 so as to be displaceable in the axial direction with respect to the fixed pulley half body 79a. The V-belt 74 is wound between the fixed pulley half body 79a and the movable pulley half body 79b. Between the inner cylinder 78 and the outer cylinder 81, a torque cam mechanism 82 is incorporated, the torque cam mechanism 82 exerting a drive force to the movable pulley half body 79b in the axial direction according to the relative rotational phase difference between the movable pulley half body 79b and the fixed pulley half body 79a. The movable pulley half body 79b is pressed elastically to the fixed pulley half body 79a by a coil spring 83.

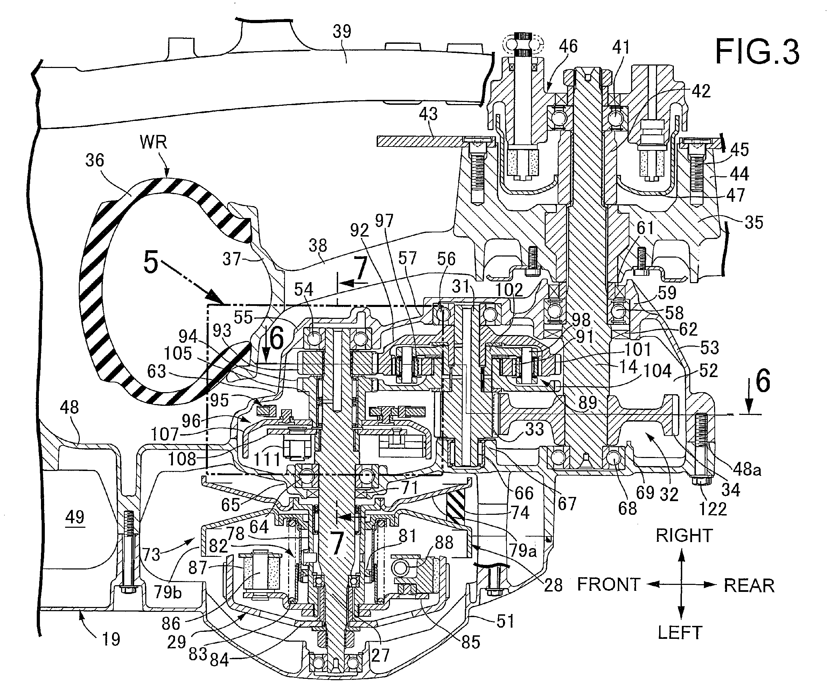

As shown in FIG. 3, the startup clutch 29 includes a clutch outer 84, a clutch inner 85, centrifugal weights 87, and clutch springs 88, the clutch outer 84 being fixed to the transmission shaft 27 and formed into a bowl shape, the clutch inner 85 being fixed to the inner cylinder 78, the centrifugal weights 87 being rotatably supported around shafts 86 at plural positions of the clutch inner 85, the clutch springs 88 being arranged between respective centrifugal weights 87 and the clutch inner 85. When a rotational drive force is transmitted from the belt-type continuously variable transmission 28 and the clutch inner 85 rotates, respective centrifugal weights 87 open to the centrifugal direction resisting the elastic force of the clutch springs 88 by action of the centrifugal force. When the rotational speed of the engine 17 reaches equal to or higher than a predetermined startup rotational speed, the centrifugal force applied to each centrifugal weight 87 surpasses the spring force of the clutch spring 88, the tip ends of the centrifugal weights 87 having opened is in contact with the inner periphery of the clutch outer 84, and frictional connection is established. According to establishment of the friction connection, the inner cylinder 78 namely the fixed pulley half body 79a and the clutch outer 84 namely the transmission shaft 27 are joined to each other.

The mechanical transmission 32 includes a planetary gear mechanism 89, a first power transmission gear 93, a second power transmission gear 94, and a shift clutch 96, the planetary gear mechanism 89 being furnished to the intermediate shaft 31, the first power transmission gear 93 being joined to the transmission shaft 27 in a relatively non-rotatable manner and connected to a ring gear 92 of the planetary gear mechanism 89, the second power transmission gear 94 being furnished to the transmission shaft 27 in a relatively rotatable manner and connected to a sun gear 91 of the planetary gear mechanism 89, the shift clutch 96 being combined to a one-way clutch 95 and switching the gear shift stage between the low-speed stage and the high-speed stage, the one-way clutch 95 being joined to the second power transmission gear 94.

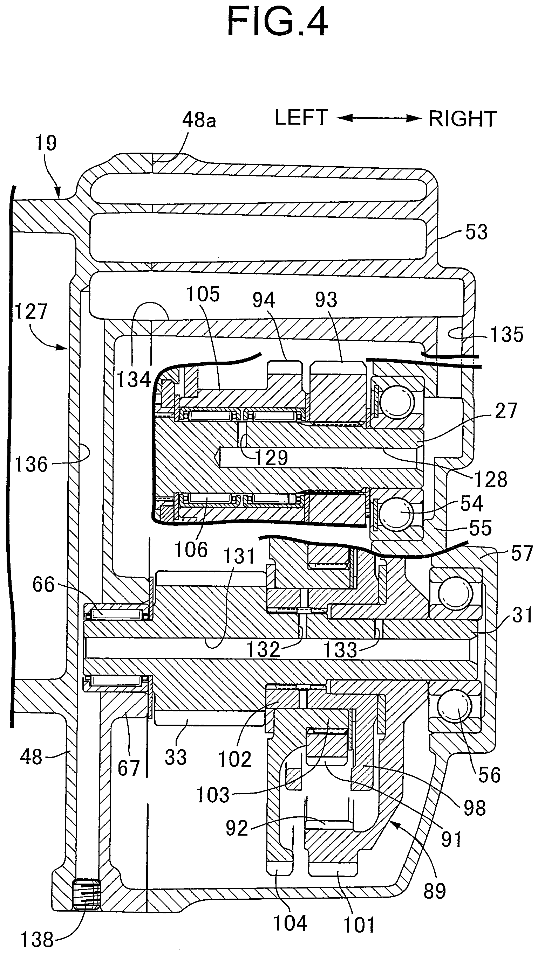

With reference also to FIG. 4, the planetary gear mechanism 89 includes the sun gear 91, the ring gear 92, a plurality of planetary gears 97, and a planetary carrier 98, the sun gear 91 being supported by the intermediate shaft 31 in a relatively rotatable manner and having external teeth that are coaxially and annularly disposed to the intermediate shaft 31, the ring gear 92 being supported by the intermediate shaft 31 in a relatively rotatable manner so as to surround the sun gear 91 and having internal teeth that are coaxially and annularly disposed to the intermediate shaft 31, the planetary gears 97 having rotational axes parallel to the axis of the intermediate shaft 31 and meshing with the external teeth of the sun gear 91 and the internal teeth of the ring gear 92, the planetary carrier 98 being supported by the intermediate shaft 31 in a relatively non-rotatable manner and rotatably supporting the planetary gears 97.

On the outer periphery of the ring gear 92, a third power transmission gear 101 is formed integrally. The third power transmission gear 101 meshes with the first power transmission gear 93. Therefore, rotational power is transmitted from the transmission shaft 27 to the ring gear 92 according to the gear ratio of the first power transmission gear 93 and the third power transmission gear 101.

The planetary carrier 98 includes a support tube 102 formed in a cylindrical shape, the support tube 102 being furnished to the intermediate shaft 31 in a coaxial manner with the intermediate shaft 31. The support tube 102 is joined to the intermediate shaft 31 in a relatively non-rotatable manner by a spline of the inner side. Therefore, the planetary carrier 98 rotates along with the intermediate shaft 31.

The sun gear 91 is coaxially formed to the intermediate shaft 31 and connected to a tubular body 103 that is furnished to the support tube 102 of the planetary carrier 98 in a coaxial manner and in a relatively rotatable manner. On the tubular body 103, a fourth power transmission gear 104 is formed integrally, the fourth power transmission gear 104 meshing with the second power transmission gear 94. The sun gear 91 is joined to the tubular body 103 in a relatively non-rotatable manner by a spline for example. Therefore, the fourth power transmission gear 104 and the sun gear 91 rotate integrally. The fourth power transmission gear 104 has the same diameter and the same number of teeth as the third power transmission gear 101.

In such planetary gear mechanism 89, when the transmission shaft 27 rotates according to the rotational power of the engine 17, a rotational force is transmitted from the first power transmission gear 93 to the third power transmission gear 101, and the ring gear 92 rotates around the axis of the intermediate shaft 31 reversely to the rotational direction of the transmission shaft 27. A rotational force is applied to the planetary gears 97 in the same direction as the rotational direction of the ring gear 92. A rotational force is applied to the sun gear 91 in the same direction as the rotational direction of the transmission shaft 27.

At this time, when the shift clutch 96 is in a disconnected state, a clutch outer 107 is supported on the transmission shaft 27 in a relatively rotatable manner. Power is not transmitted to the clutch outer 107 from the transmission shaft 27. Therefore, a rotational force in a direction reverse to the rotational direction of the transmission shaft 27 is applied to the clutch outer 107 from the fourth power transmission gear 104 that rotates integrally with the sun gear 91. Rotation of the clutch outer 107 is hindered by the one-way clutch 95. As a result, the sun gear 91 becomes a stationary state. With respect to the sun gear 91 having stopped, the rotational force of the planetary gear 97 causes rotation of the planetary carrier 98 around the intermediate shaft 31. Thus, a rotational driving force is transmitted to the intermediate shaft 31 from the transmission shaft 27 with a preset reduction ratio. Rotation of the intermediate shaft 31 is transmitted to the axle 14 of the rear wheel WR through the output gear 33 and the driven gear 34. "low-speed stage (LOW)" is established in the mechanical transmission 32.

When the rotational speed of the transmission shaft 27 increases and the shift clutch 96 comes into a connected state, a rotational force is applied to the clutch outer 107 from the transmission shaft 27 through a clutch inner 108 in the same direction as the rotational direction of the transmission shaft 27. At this time, restriction by the one-way clutch 95 is released in the clutch outer 107 of the shift clutch 96. The clutch outer 107 rotates along with the transmission shaft 27. Rotation of the clutch outer 107 causes rotation of the sun gear 91 through the second power transmission gear 94 and the fourth power transmission gear 104. The sun gear 91 rotates in the same direction as the rotational direction of the ring gear 92. In the planetary gear mechanism 89, rotation difference for each gear is cancelled. The planetary carrier 98 rotates around the intermediate shaft 31 at a speed equal to that of the ring gear 92 and the sun gear 91. As a result, "high-speed stage (HIGH)" is established in the mechanical transmission 32. Also, in the mechanical transmission 32, switching of the gear shift stage is effected in a state where the gear ratio in the belt-type continuously variable transmission 28 is low.

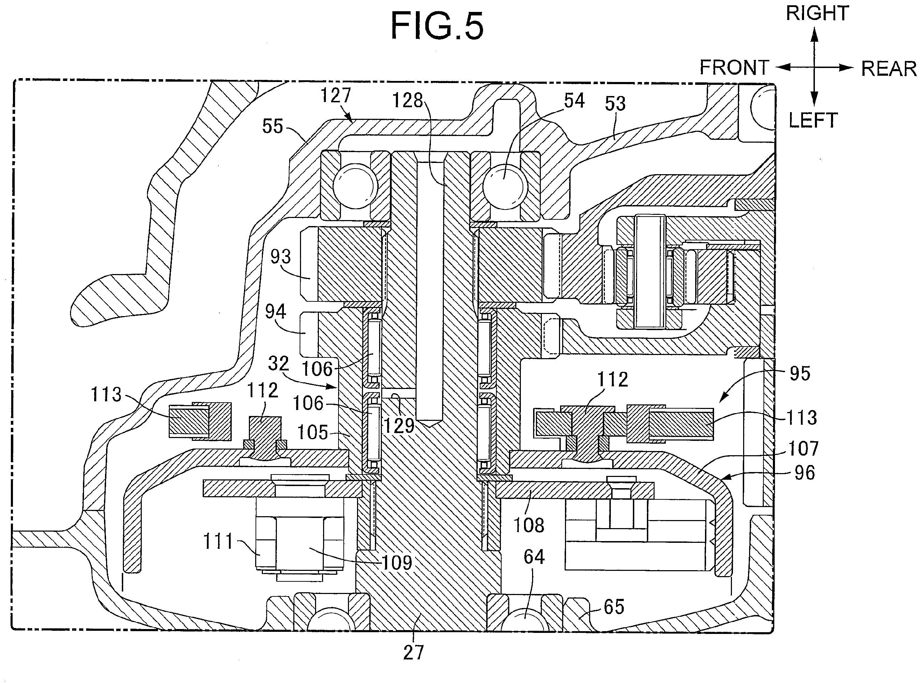

As shown in FIG. 5, the second power transmission gear 94 is furnished to the transmission shaft 27 in a relatively rotatable manner, and includes a cylindrical body 105 that is coaxial with the transmission shaft 27. The cylindrical body 105 is supported by the transmission shaft 27 through an eighth bearing 106 that is a needle bearing. The second power transmission gear 94 has the same diameter (D1=D2) and the same number of teeth as the first power transmission gear 93.

The shift clutch 96 includes the clutch outer 107, the clutch inner 108, centrifugal weights 111, and clutch springs (not illustrated), the clutch outer 107 being supported by the transmission shaft 27 in a relatively rotatable manner and formed into a bowl shape, the clutch inner 108 being connected to the transmission shaft 27 in a relatively non-rotatable manner inside the clutch outer 107, the centrifugal weights 111 being rotatably supported around shafts 109 at plural positions of the clutch inner 108, the clutch springs 88 being arranged between respective centrifugal weights 111 and the clutch inner 108. The clutch outer 107 is joined to the cylindrical body 105 of the second power transmission gear 94 in a relatively non-rotatable manner. Therefore, the second power transmission gear 94 and the clutch outer 107 rotate integrally around the axis of the transmission shaft 27. The first power transmission gear 93, the cylindrical body 105 of the second power transmission gear 94, and the clutch inner 108 are sandwiched between the step of the transmission shaft 27 and the second bearing 54, and restricted in the axial direction of the transmission shaft 27 in a state of not being relatively displaceable.

In this shift clutch 96, when the clutch inner 108 rotates along with the transmission shaft 27, respective centrifugal weights 111 open toward the centrifugal direction resisting the elastic force of the clutch springs by action of the centrifugal force. When the rotational speed of the clutch inner 108 becomes equal to or higher than a predetermined rotational speed, the centrifugal force applied to each centrifugal weight 111 surpasses the spring force of the clutch spring, and the centrifugal weights 111 effect frictional engagement with the inner periphery of the clutch outer 107. According to establishment of the frictional engagement, the clutch outer 107 and the second power transmission gear 94 rotate along with the transmission shaft 27.

Here, the connection rotational speed at which the shift clutch 96 comes from the disconnected state into the connected state is higher than the connection rotational speed at which the startup clutch 29 comes from the disconnected state into the connected state, and the disconnection rotational speed at which the shift clutch 96 comes from the connected state into the disconnected state is also higher than the disconnection rotational speed at which the startup clutch 29 comes from the connected state into the disconnected state.

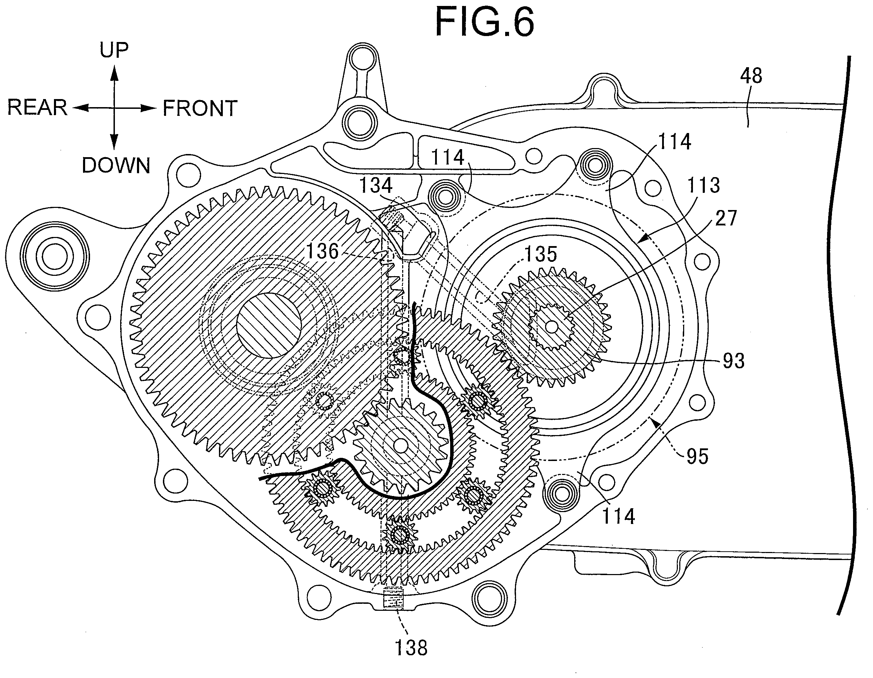

The one-way clutch 95 includes a plurality of rotation prevention members 112 and a restriction member 113, the rotation prevention members 112 being fixed to the clutch outer 107, the restriction member 113 being supported by the transmission case 19 so as to be engageable with the rotation prevention members 112. As shown in FIG. 6, the restriction member 113 includes three attaching arm portions 114 extending outward, and is formed in a ring shape. Each attaching arm portion 114 is laid over the case main body 48.

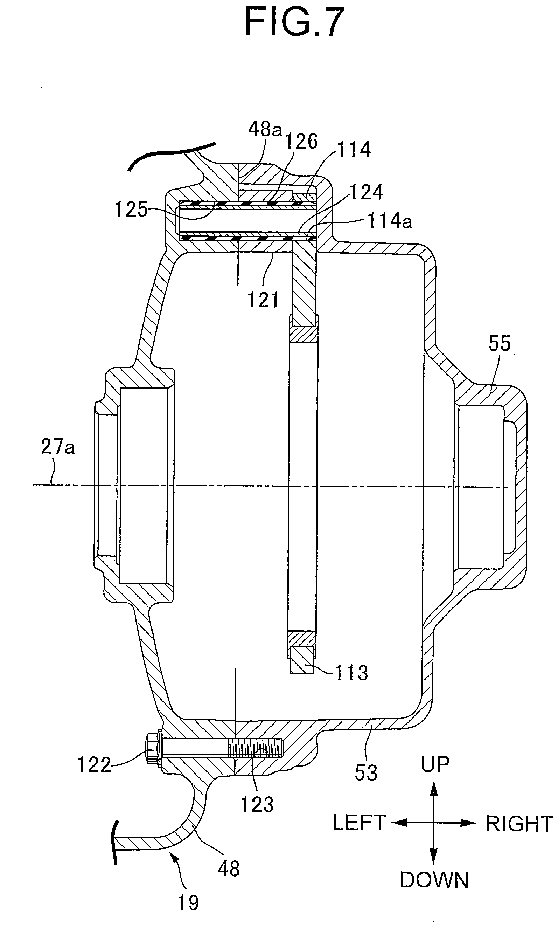

As shown in FIG. 7, a collar 121 and the attaching arm portions 114 of the restriction member 113 are laid in this order over a mating surface 48a of the case main body 48. The mating surface 48a is orthogonal to the axis 27a of the transmission shaft 27. The gear cover 53 is joined to the mating surface 48a of the case main body 48. In joining, a plurality of bolts 122 are used. The bolts 122 penetrate the case main body 48, and are screwed into screw holes 123 of the gear cover 53. The attaching arm portions 114 and the collar 121 are sandwiched between the gear cover 53 and the case main body 48. The bolts 122 and the screw holes 123 have axes parallel to the axis 27a of the transmission shaft 27. Thus, the restriction member 113 is fixed in the axial direction of the transmission shaft 27.

Support tubes 124 formed in a cylindrical shape are fitted into the mating surface 48a of the case main body 48. In the mating surface 48a, bottomed holes 125 are defined, the bottomed holes 125 receiving the support tubes 124. The bottomed hole 125 defines a cylindrical space that has an axis orthogonal to the mating surface 48a. A rubber 126 is baked to be attached to the outer peripheral surface of the support tube 124 over the entire region. The support tubes 124 penetrate the collar 121, and are fitted to support holes 114a of the attaching arm portions 114. Thus, the restriction member 113 is immovably supported around the axis 27a of the transmission shaft 27.

With reference to FIG. 5, in the one-way clutch 95, when a rotational force is applied to the clutch outer 107 in the direction reverse to the rotational direction of the transmission shaft 27, the rotation prevention members 112 engage with the restriction member 113, and the connected state is established between the restriction member 113 and the clutch outer 107. Rotation of the clutch outer 107 is restricted. When a rotational force is applied to the clutch outer 107 in the same direction as the rotational direction of the transmission shaft 27, the disconnected state is established between the restriction member 113 and the clutch outer 107. Engagement is released. Rotation of the clutch outer 107 is allowed.

With reference to FIG. 4 to FIG. 6, in the mechanical transmission 32, an oil supply mechanism 127 is incorporated, the oil supply mechanism 127 supplying oil as a lubricating oil to movable bodies. The oil supply mechanism 127 includes a first oil passage 128, a second oil passage 129, a third oil passage 131, a fourth oil passage 132, a fifth oil passage 133, an oil receiver 134 formed in a gutter-shape, a first oil supply passage 135, and a second oil supply passage 136, the first oil passage 128 being formed in the transmission shaft 27 and extending in the axial direction from the end surface on the second bearing 54 side, the second oil passage 129 extending from the first oil passage 128 in the radial direction of the transmission shaft 27 and opening to the outer peripheral surface of the transmission shaft 27 toward the eighth bearing 106, the third oil passage 131 being formed in the intermediate shaft 31 and penetrating the intermediate shaft 31 in the axial direction from the end surface on the sixth bearing 66 side to the end surface on the third bearing 56 side, the fourth oil passage 132 extending from the third oil passage 131 in the radial direction of the intermediate shaft 31 and opening to the outer peripheral surface of the intermediate shaft 31 in a sliding region between the support tube 102 and the tubular body 103, the fifth oil passage 133 extending from the third oil passage 131 in the radial direction of the intermediate shaft 31 and opening to the outer peripheral surface of the intermediate shaft 31 in a sliding region between the intermediate shaft 31 and the ring gear 92, the oil receiver 134 being formed in the case main body 48 and the gear cover 53 above the transmission shaft 27 and the intermediate shaft 31 and receiving the oil scraped up by the first to fourth power transmission gears 93, 94, 101, 104, the first oil supply passage 135 being formed in the gear cover 53, extending from the oil receiver 134 downward in the gravitational direction, and being connected to the first oil passage 128 in the second bearing housing 55, the second oil supply passage 136 being formed in the case main body 48, extending from the oil receiver 134 downward in the gravitational direction, and being connected to the third oil passage 131 in the sixth bearing housing 67. In the cylindrical body 105 of the second power transmission gear 94, a sixth oil passage 137 is defined, the sixth oil passage 137 penetrating in the radial direction and opening to the inner peripheral surface and the outer peripheral surface of the cylindrical body 105.

Inside the mechanical transmission chamber 52, oil accumulates at the bottom by action of the gravity. The oil having accumulated is agitated by the first and second power transmission gears 93, 94 on the rotating transmission shaft 27 and the third and fourth power transmission gears 101, 104 on the rotating intermediate shaft 31, and splatters inside the mechanical transmission chamber 52. The splattering oil is collected by the oil receiver 134, and is supplied to the eighth bearing 106 through the first oil supply passage 135, the first oil passage 128, and the second oil passage 129. The oil having lubricated the eighth bearing 106 is supplied to the ninth bearing 120 further going through the sixth oil passage 137. In a similar manner, the oil having been collected is supplied to the sliding region between the support tube 102 and the tubular body 103 through the second oil supply passage 136, the third oil passage 131, and the fourth oil passage 132, and is supplied to the sliding region of the ring gear 92 through the second oil supply passage 136, the third oil passage 131, and the fifth oil passage 133.

Here, the second oil supply passage 136 passes through the sixth bearing housing 67 from the oil receiver 134, extends in the up-down direction, and opens to the outer surface of the case main body 48. Such second oil supply passage 136 can be formed by drilling from the outer surface of the case main body 48. The lower end opening of the second oil supply passage 136 is closed by a plug member 138 that is screwed into the case main body 48.

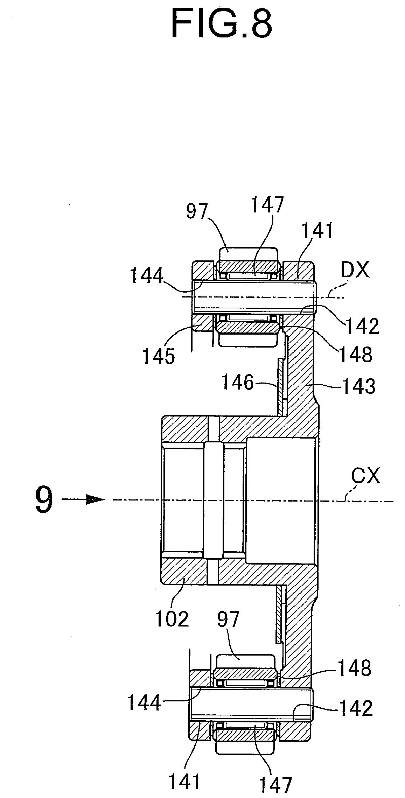

As shown in FIG. 8, the planetary carrier 98 includes the support tube 102, a plurality of support shafts 141, a main body 143, a support body 145, and a washer 146, the support tube 102 being furnished to the intermediate shaft 31 as described above, the support shaft 141 having an axis Dx that is parallel to a center axis Cx at an equal distance from the center axis Cx, the main body 143 extending outward in the radial direction from the support tube 102 and including a plurality of first receiving holes 142, the first receiving hole 142 receiving one end of the support shaft 141, the support body 145 defining storing spaces for the planetary gears 97 individually between the support body 145 and the main body 143, being continuous from the main body 143, and including second receiving holes 144, the second receiving hole 144 receiving the other end of the support shaft 141, the washer 146 being fitted to the outer periphery of the support tube 102 and being laid over the surface of the main body 143. The planetary gear 97 is mounted on the support shaft 141 through a needle bearing 147 as a bearing so as to be rotatable around the axis Dx. The planetary gear 97 includes an end surface 148 that is brought into surface-contact with a plane that is orthogonal with the axis Dx of the support shaft 141.

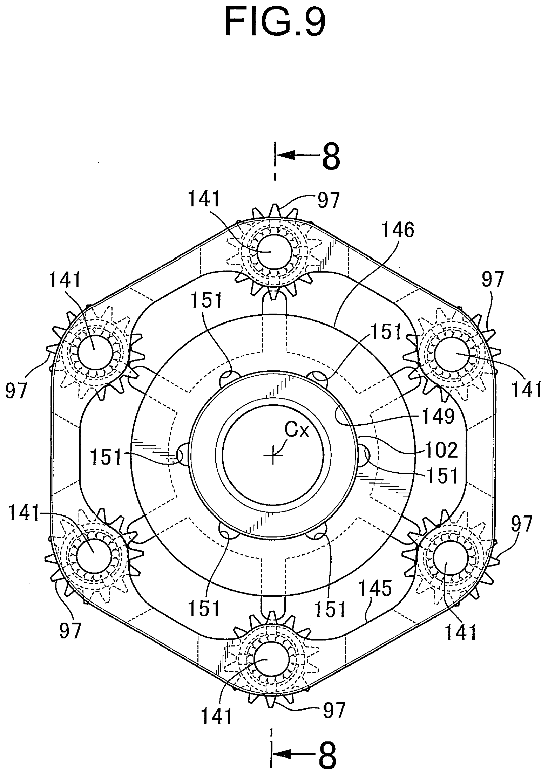

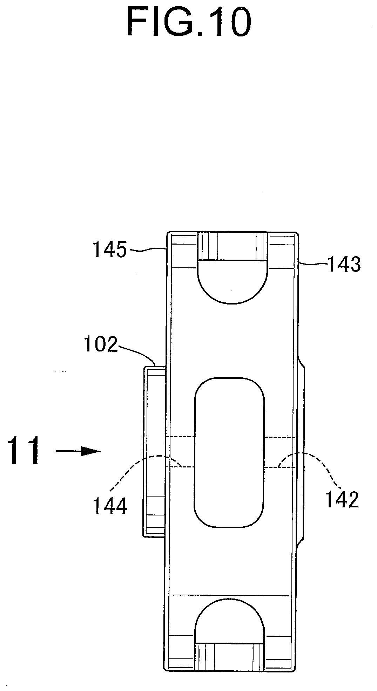

As shown in FIG. 9, in the washer 146, an opening 149 is bored, the opening 149 having a circular contour coaxial with the center axis Cx. The support tube 102 is received by the opening 149. In the contour of the opening 149, recesses 151 are defined on the radially inner side of the washer 146. The recesses 151 form gaps between the outer periphery of the support tube 102 and the recesses 151, the gaps allowing the oil to pass therethrough. The recesses 151 are disposed at equal intervals around the center axis Cx. Here, the support shafts 141 are disposed at equal intervals around the center axis Cx. The central angle between adjacent axes Dx is set to 60 degrees. The support body 145 continues around the center axis Cx. As shown in FIG. 10, the support body 145 and the main body 143 are integrated to each other between the support shafts 141. According to such integration, the supporting stiffness for the support tubes 102 is enhanced.

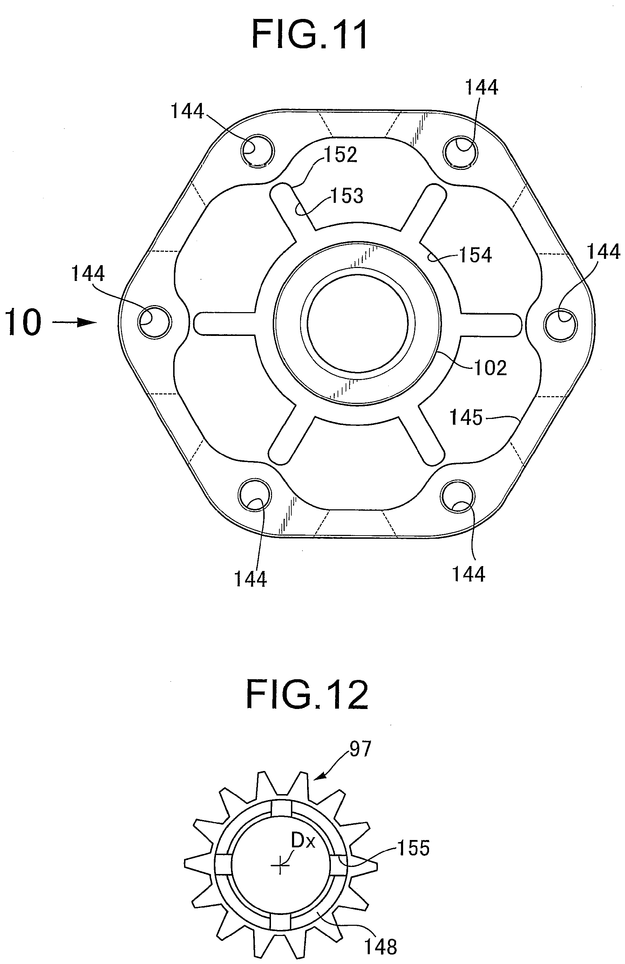

As shown in FIG. 11, on the surface of the main body 143, a plurality of grooves 153 and an annular connection groove 154 are defined, the grooves 153 extending in the radial direction individually toward the respective support shafts 141 and having oil reservoirs 152 at the outer ends of the grooves 153, the connection groove 154 being connected to the inner ends of the grooves 153 and continuing around the center axis Cx. The grooves 153 and the connection groove 154 are covered with the washer 146 excepting the oil reservoirs 152. The grooves 153 and the connection groove 154 form passages for the oil in cooperation with the washer 146. The recesses 151 of the opening 149 form gaps in the connection groove 154 at equal intervals.

As shown in FIG. 12, on the end surface 148 of the planetary gear 97, a plurality of small grooves (cutouts) 155 are defined, the small grooves 155 traversing the end surface 148 in the radial direction of the support shaft 141. The small grooves 155 guide the oil from the outer side to the inner side of the planetary gear 97. As seen from the direction of the planetary gear 97, the oil reservoir 152 of the main body 143 and the small groove 155 overlap with each other. The small grooves 155 are disposed at equal intervals around the axis Dx. Here, the small grooves 155 are disposed at the intervals of the central angle of 90 degrees.

Next, the operation of this embodiment will be explained. The planetary gear mechanism 89 includes the planetary gears 97 and the planetary carrier 98, the planetary carrier 98 rotatably supporting the planetary gears 97 by the needle bearings 147 as bearings. In the planetary carrier 98, the grooves 153 are provided so as to be capable of guiding the oil in the radial direction, the oil reservoirs 152 reserving the oil are arranged at the ends of the grooves 153, the small grooves (cutouts) 155 traversing in the radial direction are arranged on the end surface 148 of the planetary gear 97, and the oil reservoir 152 and the small groove 155 overlap with each other as seen from the direction of the planetary gear 97. When a centrifugal force is applied to the planetary carrier 98 around the center axis Cx, the oil passes through the grooves 153 and are supplied to the oil reservoirs 152. The oil in the oil reservoirs 152 passes through the surface of the main body 143 and enters the passages of the small grooves 155 of the planetary gears 97. The oil supplied to the oil reservoirs 152 spills out from the oil reservoirs 152, passes through the small grooves 155 by way of the surface of the main body 143, and is supplied to the needle bearings 147. Thus, lubrication of the needle bearing is secured.

The plurality of small grooves 155 are provided. As a result, the oil can be supplied more efficiently. Furthermore, even if clogging occurs in some small groove 155 due to some cause accompanying comactization of the planetary gear 97, supply of oil toward the needle bearings 147 is positively secured.

In the planetary gear mechanism 89, the plurality of grooves 153 are provided in the main body 143, and the connection groove 154 that connects the grooves 153 to each other is provided. By connecting the grooves 153 to each other, the oil is prevented from being supplied disproportionately to a specific groove 153, and the quantity of the oil supplied to each groove 153 is equalized. The oil can be supplied to respective grooves 153 evenly from the connection groove 154.

The washer 146 that covers the grooves 153 is provided, and the recesses 151 are provided on the radially inner side of the washer 146, the recesses 151 allowing the oil to pass therethrough. By arranging the recesses 151 in the washer 146, the oil passes through the inner side of the washer 146, and the oil can be supplied to the grooves 153 through the connection groove 154.

The plurality of recesses 151 are provided, and are disposed at equal intervals in the peripheral direction. By arranging the recesses 151 in the washer 146, the oil can be supplied to the grooves 153 evenly from any directions.

As described above, the planetary gear mechanism 89 according to the present embodiment includes the planetary carrier 98 and the plurality of planetary gears 97, the planetary carrier 98 including the plurality of support shafts 141 having the axis Dx that is parallel to the center axis Cx at an equal distance from the center axis Cx, the planetary gear 97 being rotatably furnished to the support shaft 141 and including the end surface 148 that is brought into surface-contact with a plane that is orthogonal with the axis Dx of the support shaft 141, and the plurality of small grooves 155 are defined on the end surface 148 of the planetary gear 97, the small grooves 155 traversing the end surface 148 in the radial direction of the support shaft 141. When the planetary gears 97 rotate, the planetary gears 97 are supported in the axial direction by surface-contact of the end surface 148. The small grooves 155 form the passages between the end surface 148 and the flat surface, the passages communicating with the outer peripheral surface of the support shafts 141. The oil can be supplied from the passages to the gaps between the support shafts 141 and the planetary gears 97. Even if clogging occurs in some small groove 155, the supply of the oil toward the gaps between the support shafts 141 and the planetary gears 97 is positively secured. Furthermore, the small grooves 155 can be formed on the end surface 148 easily by forging or other working methods.

The planetary carrier 98 includes the support tube 102, the main body 143, and the support body 145, the support tube 102 being furnished to the intermediate shaft (shaft body) 31, the main body 143 extending outward in the axial direction from the support tube 102 and including the plurality of first receiving holes 142, the first receiving hole 142 receiving one end of the support shaft 141, the support body 145 defining the storing spaces for the planetary gears 97 individually between the support body 145 and the main body 143, being continuous from the main body 143, and including the second receiving holes 144, the second receiving hole 144 receiving the other end of the support shaft 141. Since the support shaft 141 is supported by the main body 143 and the support body 145 which are formed integrally, the supporting stiffness for the planetary gears 97 is enhanced, and inclination of the rotational axes Dx of the planetary gears 97 can be suppressed.

At this time, in the main body 143 of the planetary carrier 98, the grooves 153 are defined, the grooves 153 individually extending in the radial direction toward the respective support shafts 141 and including the oil reservoirs 152 at the outer ends. In the main body 143 of the planetary carrier 98, the annular connection groove 154 is defined, the connection groove 154 being connected to the inner ends of the plurality of grooves 153 and continuing around the center axis Cx.

The embodiment of the present invention has been explained above. However, the present invention is not limited to the embodiment described above, and various design changes can be effected without departing from the gist of the present invention.
[SUBJECT] To provide a planetary gear device capable of securing supply of oil toward a bearing even if the planetary gear is made compact.
[MEANS FOR SOLUTION] The planetary gear device includes a planetary gear 97 and a planetary carrier 98 that rotatably supports the planetary gear 97 by a bearing 147. The planetary carrier 98 includes a groove 153 that is capable of guiding oil in a radial direction of the planetary carrier 98, an oil reservoir 152 is arranged at an end of the groove 153, the oil reservoir 152 accumulating the oil therein, a cutout is arranged on an end surface 148 of the planetary gear 97, the cutout traversing the end surface 148 in a radial direction of the planetary gear 97, and the oil reservoir 152 and the cutout overlap with each other as seen from a direction of the planetary gear 97.

### [DESCRIPTION OF REFERENCE NUMERALS AND SYMBOLS]

89... Planetary gear device (planetary gear mechanism)
97... Planetary gear
98... Planetary carrier
146... Washer
147... Bearing (needle bearing)
148... End surface
151... Recess
152... Oil reservoir
153... Groove
155... Cutout (small groove)

## Claims

1. A planetary gear device, comprising:
a planetary gear (97); and
a planetary carrier (98) that rotatably supports the planetary gear (97) by a bearing (147),
**characterized in that**
the planetary carrier (98) includes a groove (153) that is capable of guiding oil in a radial direction of the planetary carrier (98),
an oil reservoir (152) is arranged at an end of the groove (153), the oil reservoir (152) accumulating the oil therein,
a cutout (155) is arranged on an end surface (148) of the planetary gear (97), the cutout (155) traversing the end surface (148) in a radial direction of the planetary gear (97) and
the oil reservoir (152) and the cutout (155) overlap with each other as seen from a direction of the planetary gear (97).

2. The planetary gear device according to claim 1, wherein a plurality of cutouts (155) are provided as said cutout (155).

3. The planetary gear device according to claim 1 or 2,
wherein a plurality of grooves (153) are provided as said groove (153), and
a connection groove (154) is provided to connect the grooves (153) to each other.

4. The planetary gear device according to claim 3,
wherein a washer (146) that covers the grooves (153) is provided, and
a recess (151) is provided on a radially inner side of the washer (146), the recess (151) allowing the oil to pass therethrough.

5. The planetary gear device according to claim 4,
wherein a plurality of recesses (151) are provided as said recess (151), the recesses (151) being disposed at equal intervals in a peripheral direction.
